# EUROPEAN PATENT APPLICATION

(11) **EP 1 967 347 A1**
(43) Date of publication of application: **10.09.2008**
(21) Application number: 08004020.7
(22) Date of filing: 04.03.2008
(51) Int. Cl.: B29C 45/14, B29C 45/00, F16C 13/00, F16H 55/48

(54) **Resin component**

(30) Priority: 07.03.2007 JP 2007056790
(71) Applicant: JTEKT Corporation, Osaka-shi Osaka 542-8502 (JP)
(72) Inventor: Murao, Satoru, Osaka-shi Osaka 542-8502 (JP)
(74) Representative: Schaeberle, Steffen

(57) **Abstract**

A resin wound component is configured such that a ring-shaped resin portion (1) is integrally formed with an outer circumference of a ring-shaped metal member (2) by a film gate (G). The resin portion includes a ring-shaped surrounding portion for surrounding axial end surfaces of outer circumferential edges of the ring-shaped metal member. At this time, the thickness of a ring-shaped surrounding portion on the gate side (t₁) is configured to be larger than that of a ring-shaped surrounding portion (t₂) on an opposite side to the gate.

## Description

### BACKGROUND OF THE INVENTION

### 1. Field of the Invention

The present invention relates to a resin wound component, and more particularly, to a resin wound component in which a ring-shaped resin portion is integrally formed with an outer circumference of a ring-shaped metal member by (through) a film gate.

### 2. Related Art

Conventionally, for example, as a pulley of an ancillary drive belt of an automobile engine, a resin wound component has been used in which a metal member such as a rolling bearing or a metal hub is integrally formed with an inner circumference of a ring-shaped resin portion (pulley) having a belt guide surface formed in an outer circumference thereof.

Such a resin wound component is manufactured by an insert molding for simultaneously integrating the metal member with the resin portion formed by an injection molding. As a gate type, a pin point type or a side gate type has been used. However, internal stress (internal stress caused by a thermal expansion difference between the resin portion and the metal member) is concentrated in a gate mark portion of the resin portion in both types, and thus a problem arises in that a crack may easily occur in the gate mark portion. Additionally, a resin contact surface (weld portion) where resins between the gates come into contact with each other is generated, and thus a problem arises in that the resin contact surface cracks due to a thermal shock.

For this reason, the applicant has proposed a technique in which a dummy shaft having a flange portion, of which the outer diameter is smaller than that of the metal member and which is formed in one end of a shaft portion, is disposed in a cavity, and fused resin is filled into the cavity through a ring-shaped film gate formed by a flange portion of the dummy shaft and a cavity mold (JP-A-8-142112). According to the technique disclosed in JP-A-8-142112, since the gate mark of the resin portion continues in a stripe shape along the inner circumferential surface, it is possible to prevent internal stress from being concentrated in the gate trace and to prevent a crack from occurring in the gate mark portion. Additionally, since the weld portion is not generated between the gates, it is possible to prevent a case where the resin contact surface cracks due to a thermal shock.

However, while the resin portion which is integrally formed with the outer circumference of the metal member includes the ring-shaped surrounding portion for surrounding the axial end surfaces of outer circumferential surfaces of the metal member, strength of the ring-shaped surrounding portion on the gate side among the ring-shaped surrounding portion may reduce, and then a vibration may increase. As a result, a problem arises in that abnormal noise occurs.

The inventor has carefully studied a reason of the strength decrease and then found out that orientations of reinforced fiber contained in the resin portion of the ring-shaped surrounding portion on the gate side and the ring-shaped surrounding portion on the opposite side to the gate_are different from each other at the time an injection molding is carried out through a film gate. Thus, the inventor has contrived this invention.

### SUMMARY OF THE INVENTION

An object of the invention is to provide a resin wound component that is designed to prevent strength decrease of the ring-shaped surrounding portion for surrounding axial end surfaces of outer circumferential edges of the metal member and to prevent a crack from occurring in the ring-shaped surrounding portion, in the resin portion integrally formed with the outer circumference of the metal member by (through) the film gate.

According to an aspect of the invention, there is provided a resin wound component comprising:
a ring-shaped metal member; and
a ring-shaped resin portion which is integrally formed with an outer circumference of the ring-shaped metal member by (through) a film gate,
wherein the resin portion includes a ring-shaped surrounding portion for surrounding axial end surfaces of outer circumferential edges of the ring-shaped metal member, and
a thickness of the ring-shaped surrounding portion on a ga te side is larger than that of the ring-shaped surrounding portion on an opposite side to the gate.

In the resin wound component according to the invention, the resin portion is integrally formed with the outer circumference of the ring-shaped metal member by the film gate. At this time, in the ring-shaped surrounding portion for surrounding axial end surfaces of outer circumferential edges of the metal member, the thickness of the ring-shaped surrounding portion on the gate side is configured to be larger than that of the ring-shaped surrounding portion on the opposite side to the gate.

The reinforced fiber such as glass fiber contained in the resin portion is oriented in a predetermined direction in the manner that fused resin is filled into the cavity through the film gate and then flows in the cavity. However, since the ring-shaped surrounding portion on the gate side is finally filled into the cavity, orientation of the reinforced fiber is irregular compared with the ring-shaped surrounding portion on the opposite side to the gate. Accordingly, strength of the ring-shaped surrounding portion on the opposite side to the gate becomes smaller than that of the ring-shaped surrounding portion on the gate side in the condition that the thicknesses thereof are the same as each other.

In this invention, the ring-shaped surrounding portion on the gate side is thickened so as to compensate strength decrease of the ring-shaped surrounding portion on the gate side caused by irregular orientation of the reinforced fiber. As a result, it is possible to prevent a crack from occurring in the ring-shaped surrounding portion on the gate side. Therefore, it is possible to prevent abnormal noise caused by the crack.

The thickness of the ring-shaped surrounding portion on the gate side may be 1.4 times or more of the thickness of the ring-shaped surrounding portion on the opposite side to the gate. In this case, strength of the ring-shaped surrounding portion on the gate side is the same or more than that of the ring-shaped surrounding portion on the opposite side to the gate, and thus it is possible to prevent a crack from occurring in the gate-side ring-shape surrounding portion.

According to the resin wound component related to the invention, it is possible to prevent a crack from occurring in the ring-shaped surrounding portion for surrounding axial end surfaces of outer circumferential edges of the metal member, in the resin portion integrally formed with the outer circumference of the metal member.

According to another aspect of the invention, a manufacturing method of a resin wound component comprising the steps of:
disposing a dummy shaft having a shaft portion in a cavity to form a forming portion;
inserting a ring-shaped metal member around the shaft portion;
filling the forming portion with a fused resin through a film gate provided in a vicinity of an outer circumferential edge of the ring-shaped metal member so that the ring-shaped resin portion is integrally formed with the ring-shaped metal member on an outer circumference of the ring-shaped metal member,
wherein a ring-shaped surrounding portion for surrounding axial end surfaces of the outer circumferential edges of the ring-shaped metal member is formed in the resin portion, and
a thickness of the ring-shaped surrounding portion on a gate side is larger than that of the ring-shaped surrounding portion on an opposite side to the gate.

Further, in the manufacturing method of a resin wound component according to the invention, wherein the dummy shaft may have a flange portion provided with a spherical surface, and the cavity may have a spherical concave portion, such that a space between an outer circumferential edge of the spherical surface of the flange portion and an opening edge of the concave portion forms a ring-shaped film gate.

According to another aspect of the invention there is provided a resin pulley apparatus comprising:
a ring-shaped metal member; and
a ring-shaped pulley which is integrally formed with an outer circumference of the ring-shaped metal member by (through) a film gate,
wherein the resin pulley includes a ring-shaped surrounding portion for surrounding axial end surfaces of outer circumferential edges of the ring-shaped metal member, and
wherein a thickness of the ring-shaped surrounding portion on a gate side is larger than that of the ring-shaped surrounding portion on an opposite side to the gate.

### BRIEF DESCRIPTION OF THE DRAWINGS

Fig. 1 is a sectional view illustrating a resin wound component according to an embodiment of the invention.
Fig. 2 is a partially perspective view illustrating the resin wound component shown in Fig. 1.
Fig. 3 is a sectional view illustrating a main part of a forming device which can be used to manufacture the resin wound component according to the invention.
Figs. 4A and 4B are schematic views illustrating an orientation state of glass fiber, in which Fig. 4A illustrates the orientation state of a ring-shaped surrounding portion on the opposite side to the gate and Fig. 4B illustrates the orientation state of a ring-shaped surrounding portion on the gate side.

### DETAILED DESCRIPTION OF THE PREFERRED EMBODIMENTS

Hereinafter, a resin wound component according to an exemplary embodiment of the invention will be described in detail with reference to the accompanying drawings.

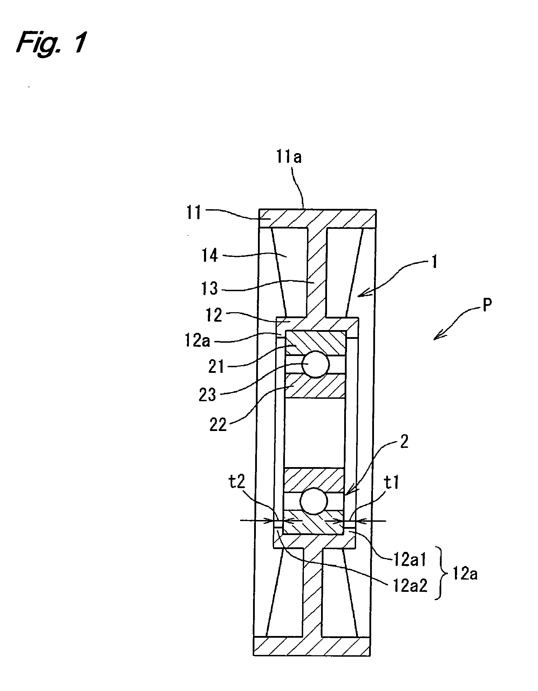

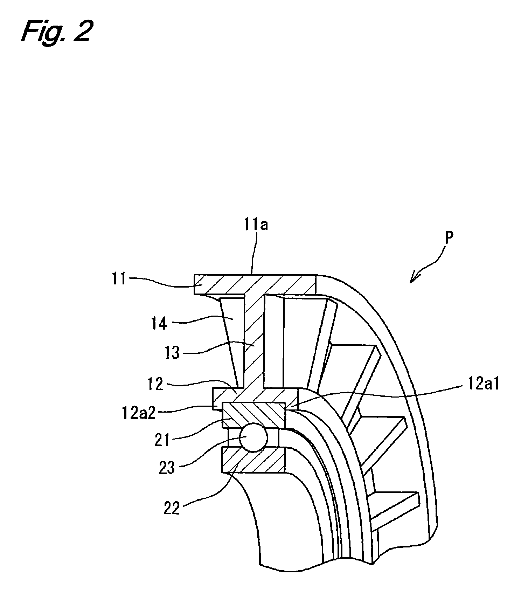

Fig. 1 is a sectional view illustrating a resin pulley P according to an embodiment of the invention. Fig. 2 is a partially perspective view illustrating the same. The resin pulley P is used for example as a pulley of an ancillary drive belt of an automobile engine. The resin pulley P is configured such that a rolling bearing 2 as a metal member is inserted into an inner circumference of a ring-shaped resin portion 1. An outer circumferential cylindrical portion 11 having a belt guide surface 11a formed in an outer circumference thereof is formed in an outer circumferential side of the resin portion 1. An inner circumferential cylindrical portion 12 for fixing an outer circumference of an outer ring 21 of the rolling bearing 2 is formed in an inner circumference thereof. The inner circumferential cylindrical portion 12 includes a ring-shaped surrounding portion 12a for surrounding axial end surfaces of outer circumferential edges of the outer ring 21 of the rolling bearing 2. Additionally, a disk portion 13 is formed between the outer circumferential cylindrical portion 11 and the inner circumferential cylindrical portion 12. A plurality of ribs 14 are formed in the disk portion 13 in a radial direction thereof, but the ribs 14 may be omitted. In Figs. 1 and 2, Reference Numeral 22 denotes an inner ring which is disposed in an inner diameter side of the outer ring 21 so as to be concentric relative to the outer ring 21, and Reference Numeral 23 denotes balls as a plurality of rolling elements which are arranged in a ring-shaped space formed between the outer ring 21 and the inner ring 22. The balls 23 are held by a cage (not shown) at a predetermined interval in the circumferential direction.

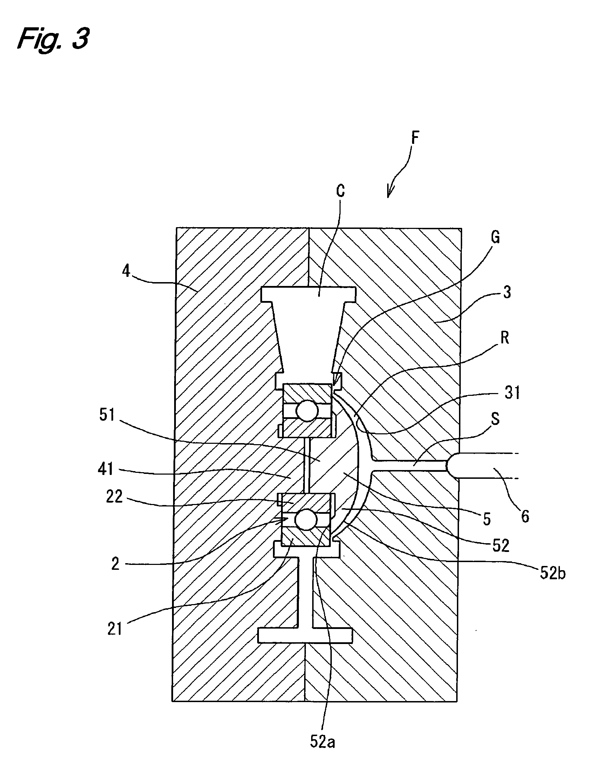

The resin pulley P can be manufactured by, for example, a film gate type forming device shown in Fig. 3. Fig. 3 is a sectional view illustrating a forming unit F of an injection forming device. The forming unit F includes a pair of cavity molds 3 and 4 for constituting a cavity C, a dummy boss shaft 5 disposed inside the cavity C, and a nozzle 6 for injecting fused resin. A spool S is formed in one cavity mold 3 from the pair of cavity molds 3 and 4, and the nozzle 6 is connected to the spool S. Additionally, a spherical concave portion 31 is formed in an inner side formed on the same plane with the spool S.

The dummy boss shaft 5 includes a cylindrical shaft portion 51 which is fitted to the inner circumference of the inner ring 22 of the rolling bearing 2, and a flange portion 52 which follows an axial end surface of the rolling bearing 2. An outer diameter of the flange portion 52 is configured to be smaller than that of the outer ring 21 of the rolling bearing 2. Additionally, a flat surface 52a which is perpendicular to an axis of the shaft portion 51 is formed in one side of the flange portion 52, and a spherical surface 52b is formed in the other side thereof.

A gap between the spherical surface 52b of the flange portion 52 and the concave portion 31 forms a runner R which communicates with the spool S. Also, a space between an outer circumferential edge of the spherical surface 52b and an opening edge of the concave portion 31 forms a ring-shaped film gate G.

In order to manufacture the resin pulley P by the forming unit F with such a configuration, the inner circumference of the inner ring 22 of the rolling bearing 2 is fitted to a core portion 41 of the cavity mold 4 while the mold is opened. Subsequently, the shaft portion 51 of the dummy boss shaft 5 is fitted to the inner circumference of the inner ring 22, and then the flat surface 52a of the flange portion 52 is made to follow the axial end surface of the outer ring 21 of the rolling bearing 2. Subsequently, the mold is closed, and then fused resin is injected through the nozzle 6. At this time, the fused resin spreads concentrically while being introduced from the spool S to the runner R, and then is filled into the cavity C through the ring-shaped film gate G.

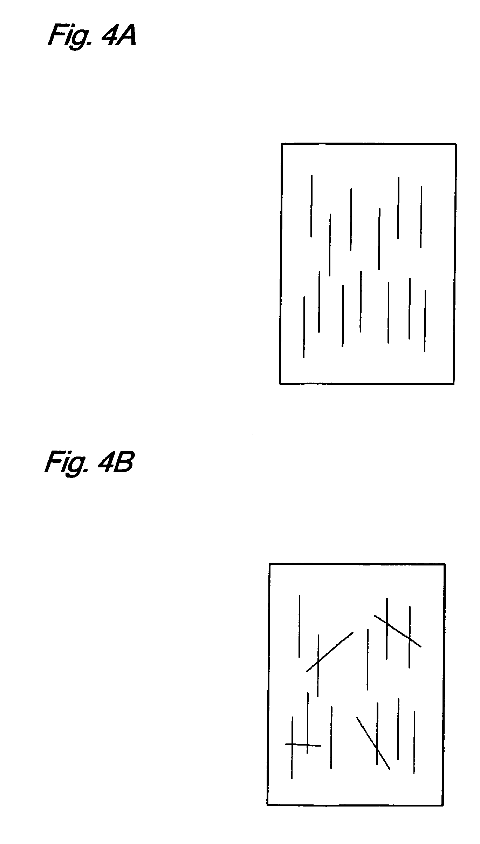

The fused resin contains reinforced fiber such as glass fiber in order to reinforce the resin portion 1. The reinforced fiber is oriented in a predetermined direction while the fused resin flows in the cavity C, and thus it is possible to exhibit reinforcing effect thanks to the oriented reinforced fiber. However, since the fused resin in the vicinity of the film gate G is finally injected into the cavity C, the fused resin cannot flow. As a result, the reinforced fiber contained in the finally injected fused resin is oriented in a random order compared with the reinforced fiber contained in the first injected fused resin, thereby deteriorating orientation property. Figs. 4A and 4B schematically illustrate an orientation state of the reinforced fiber in the ring-shaped surrounding portion 12a of the inner circumferential cylindrical portion 12, in which Fig. 4A illustrates the orientation state of the glass fiber (reinforced fiber) in a ring-shaped surrounding portion 12a2 on an opposite side to the gate, and Fig. 4A illustrates the orientation state of the glass fiber in a ring-shaped surrounding portion 12a1 on a gate side. In the ring-shaped surrounding portion on the opposite side to the gate, the glass fiber is oriented in a good order, however in the ring-shaped surrounding portion on the gate side, the glass fiber is oriented in a random order. The inventor has found out that about 30% of glass fiber is oriented in a random order in the ring-shaped surrounding portion on the gate side when the orientation state of the glass fiber is examined by an electron microscope from several resin wound components manufactured by (through) the ring-shaped film gate. Additionally, the inventor has found out that strength of the ring-shaped surrounding portion 12a1 on the gate side is smaller by about 30% than that of the ring-shaped surrounding portion 12a2 on the opposite side to the gate in proportion to the random ratio of the glass fiber when strength of the ring-shaped surrounding portion 12a1 on the gate side and the ring-shaped surrounding portion 12a2 on the opposite side to the gate having the same thickness as each other is examined.

For this reason, in this embodiment, the thickness t1 (see Fig. 1) of the ring-shaped surrounding portion 12a1 on the gate side is configured to be about 1.4 times the thickness t2 of the ring-shaped surrounding portion 12a2 on the opposite side to the gate (1/0.7 = about 1.4). Accordingly, an amount of strength decrease of the ring-shaped surrounding portion 12a1 on the gate side oriented in a random order is compensated, and thus it is possible to allow the strength of the ring-shaped surrounding portion 12a1 on the gate side to be the same or more than that of the ring-shaped surrounding portion 12a2 on the opposite side to the gate. As a result, it is possible to prevent the ring-shaped surrounding portion 12a1 on the gate side from cracking. Therefore, it is possible to prevent abnormal noise caused by the crack from occurring.

In this embodiment, while the resin wound component manufactured by using the ring-shaped film gate has been described, the invention is not limited thereto, but is applicable to the resin wound component manufactured by using a plurality of film gates arranged in the circumferential direction.

Additionally, as the resin forming the resin portion, various synthetic resins or synthetic rubber may be used so long as the resin can be used for the injection molding process.

## Claims

1. A resin wound component comprising:
a ring-shaped metal member; and
a ring-shaped resin portion which is integrally formed with an outer circumference of the ring-shaped metal member by a film gate,
wherein the resin portion includes a ring-shaped surrounding portion for surrounding axial end surfaces of outer circumferential edges of the ring-shaped metal member, and
a thickness of the ring-shaped surrounding portion on a gate side is larger than that of the ring-shaped surrounding portion on an opposite side to the gate.

2. The resin wound component according to Claim 1, wherein the thickness of the ring-shaped surrounding portion on the gate side is 1.4 times or more of the thickness of the ring-shaped surrounding portion on the opposite side to the gate.

3. A manufacturing method of a resin wound component comprising the steps of:
disposing a dummy shaft having a shaft portion in a cavity to form a forming portion;
inserting a ring-shaped metal member around the shaft portion;
filling the forming portion with a fused resin through a film gate provided in a vicinity of an outer circumferential edge of the ring-shaped metal member so that the ring-shaped resin portion is integrally formed with the ring-shaped metal member on an outer circumference of the ring-shaped metal member,
wherein a ring-shaped surrounding portion for surrounding axial end surfaces of the outer circumferential edges of the ring-shaped metal member is formed in the resin portion, and
a thickness of the ring-shaped surrounding portion on a gate side is larger than that of the ring-shaped surrounding portion on an opposite side to the gate.

4. The manufacturing method of a resin wound component according to Claim 3, wherein the dummy shaft has a flange portion provided with a spherical surface, and the cavity has a spherical concave portion
wherein a space between an outer circumferential edge of the spherical surface of the flange portion and an opening edge of the concave portion forms a ring-shaped film gate.

5. A resin pulley apparatus comprising:
a ring-shaped metal member; and
a ring-shaped pulley which is integrally formed with an outer circumference of the ring-shaped metal member by a film gate,
wherein the resin pulley includes a ring-shaped surrounding portion for surrounding axial end surfaces of outer circumferential edges of the ring-shaped metal member, and
wherein a thickness of the ring-shaped surrounding portion on a gate side is larger than that of the ring-shaped surrounding portion on an opposite side to the gate.
